(19) Europäisches Patentamt
European Patent Office
Office européen des brevets

(11) **EP 4 507 434 A1**

(12) **EUROPEAN PATENT APPLICATION**
published in accordance with Art. 153(4) EPC

(43) Date of publication:
**12.02.2025 Bulletin 2025/07**

(21) Application number: **23778383.2**

(22) Date of filing: **30.03.2023**

(51) International Patent Classification (IPC):
**H04W 72/12** (2023.01)

(52) Cooperative Patent Classification (CPC):
**H04W 72/12**

(86) International application number:
**PCT/CN2023/085115**

(87) International publication number:
**WO 2023/186018 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.04.2022 CN 202210351237**

(71) Applicant: **Vivo Mobile Communication Co., Ltd.
Dongguan, Guangdong 523863 (CN)**

(72) Inventors:
• **SUN, Rongrong**
  **Dongguan, Guangdong 523863 (CN)**
• **LIU, Hao**
  **Dongguan, Guangdong 523863 (CN)**
• **TAMRAKAR, Rakesh**
  **Dongguan, Guangdong 523863 (CN)**
• **SONG, Yang**
  **Dongguan, Guangdong 523863 (CN)**

(74) Representative: **Lavoix
Bayerstraße 83
80335 München (DE)**

(54) **INFORMATION TRANSMISSION METHOD AND APPARATUS, TERMINAL, AND READABLE STORAGE MEDIUM**

(57) The present application discloses an information transmission method and apparatus, a terminal, and a readable storage medium, and belongs to the technical field of communications. The information transmission method of embodiments of the present application includes: determining, by a terminal, a first PTRS port and a transmission layer or DMRS port corresponding to the first PTRS port according to a first TPMI field, where the first TPMI field is a TPMI field associated with a target object associated with uplink transmission of the terminal, and the first PTRS port is a PTRS port actually used by the terminal; and performing uplink transmission by using the first PTRS port and the transmission layer or DMRS port corresponding to the first PTRS port.

A terminal determines a first PTRS port and a transmission layer or DMRS port corresponding to the first PTRS port according to a first TPMI field — 21

The terminal performs uplink transmission by using the first PTRS port and the transmission layer or DMRS port corresponding to the first PTRS port — 22

**FIG. 2**

**Description**

**CROSS-REFERENCE TO RELATED APPLICATIONS**

The present application claims priority to Chinese Patent Application No. 202210351237.9 filed on April 2, 2022, which is incorporated herein by reference in its entirety.

**TECHNICAL FIELD**

The present application belongs to the technical field of communication, and in particular relates to an information transmission method and apparatus, a terminal, and a readable storage medium.

**BACKGROUND**

In order to improve the throughput and reliability of uplink data transmission, a terminal can use multiple antenna panels (panel) for simultaneous uplink transmission. The multiple panels may simultaneously transmit the same or different data on the same or different frequency domain resources. In scenarios with multiple panels, the terminal may be configured with multiple phase tracking reference signal (Phase Tracking Reference Signal, PTRS) ports for uplink transmission. In this case, how to determine the PTRS port actually used by the terminal is an urgent problem that needs to be solved.

**SUMMARY**

Embodiments of the present application provide an information transmission method and apparatus, a terminal, and a readable storage medium, which can solve the problem of how to determine the PTRS port actually used by the terminal.
In a first aspect, an information transmission method is provided, which includes:

determining, by a terminal, a first PTRS port and a transmission layer or demodulation reference signal (Demodulation Reference Signal, DMRS) port corresponding to the first PTRS port according to a first transmit precoding matrix indicator (Transmit Precoding Matrix Indicator, TPMI) field, where the first TPMI field is a TPMI field associated with a target object associated with uplink transmission of the terminal, and the first PTRS port is a PTRS port actually used by the terminal; and
performing, by the terminal, uplink transmission by using the first PTRS port and the transmission layer or DMRS port corresponding to the first PTRS port.

In a second aspect, an information transmission apparatus is provided, which is applied to a terminal and includes:

a first determination module, configured to determine a first PTRS port and a transmission layer or DMRS port corresponding to the first PTRS port according to a first TPMI field, where the first TPMI field is a TPMI field associated with a target object associated with uplink transmission of the terminal, and the first PTRS port is a PTRS port actually used by the terminal; and
a transmission module, configured to perform uplink transmission by using the first PTRS port and the transmission layer or DMRS port corresponding to the first PTRS port.

In a third aspect, a terminal is provided. The terminal includes a processor and a memory. The memory stores programs or instructions runnable on the processor, and the programs or instructions, when executed by the processor, implement the steps of the method according to the first aspect.
In a fourth aspect, a terminal is provided, which includes a processor and a communication interface. The processor is configured to determine a first PTRS port and a transmission layer or DMRS port corresponding to the first PTRS port according to a first TPMI field, where the first TPMI field is a TPMI field associated with a target object associated with uplink transmission of the terminal, and the first PTRS port is a PTRS port actually used by the terminal; and the communication interface is configured to perform uplink transmission by using the first PTRS port and the transmission layer or DMRS port corresponding to the first PTRS port.
In a fifth aspect, a readable storage medium is provided. The readable storage medium stores programs or instructions, and the programs or instructions, when executed by a processor, implement the steps of the method according to the first aspect.

In a sixth aspect, a chip is provided. The chip includes a processor and a communication interface. The communication interface is coupled with the processor, and the processor is configured to run programs or instructions to implement the steps of the method according to the first aspect.

In a seventh aspect, a computer program/program product is provided. The computer program/program product is stored in a storage medium, and the computer program/program product is executed by at least one processor to implement the steps of the method according to the first aspect.

In the embodiments of the present application, the terminal can determine a first PTRS port and one or plural of transmission layers or DMRS ports corresponding to the first PTRS port according to a first TPMI field associated with the target object associated with the uplink transmission of the terminal, and perform uplink transmission by using a first PTRS port and one or plural of transmission layers or DMRS ports corresponding to the first PTRS port. A first PTRS port is the PTRS port actually used by the terminal. In this way, the terminal can determine one or plural of PTRS port actually used by the terminal, thus effectively ensuring PTRS transmission performance.

## BRIEF DESCRIPTION OF THE DRAWINGS

FIG. 1 is a block diagram of a wireless communication system applicable in an embodiment of the present application.

FIG. 2 is a flowchart of an information transmission method provided by an embodiment of the present application.

FIG. 3 is a schematic structural diagram of an information transmission apparatus provided by an embodiment of the present application.

FIG. 4 is a schematic structural diagram of a communication device provided by an embodiment of the present application.

FIG. 5 is a schematic structural diagram of a terminal provided by an embodiment of the present application.

## DETAILED DESCRIPTION

Technical solutions in embodiments of the present application will be clearly described below with reference to the drawings in the embodiments of the present application. Apparently, the described embodiments are merely some rather than all of the embodiments of the present application. All other embodiments obtained by a person skilled in the art based on the embodiments of the present application still fall within the scope of protection of the present application.

Terms such as "first" and "second" in the description and claims of the present application are used for distinguishing similar objects, instead of describing a specific order or sequence. It is to be understood that terms used in this way are exchangeable in a proper case, so that the embodiments of the present application can be implemented in an order different from the order shown or described herein; and the objects distinguished by "first" and "second" are usually of the same class and do not limit the number of the objects; for example, the number of first objects may be one or more. In addition, "and/or" in the description and claims represents at least one of the connected objects. Character "/" generally represents an "or" relationship between the associated objects.

It is worth pointing out that the technologies described in the embodiments of the present application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. Terms "system" and "network" in the embodiments of the present application are usually interchangeable for use. The technologies described not only can be applied to the systems and radio technologies mentioned above, but also can be applied to other systems and radio technologies. The following description describes a new radio (New Radio, NR) system for example purposes and uses NR terminology in most of the following description, but these technologies can also be applied to applications other than NR system applications, such as 6th generation (6th Generation, 6G) communication systems.

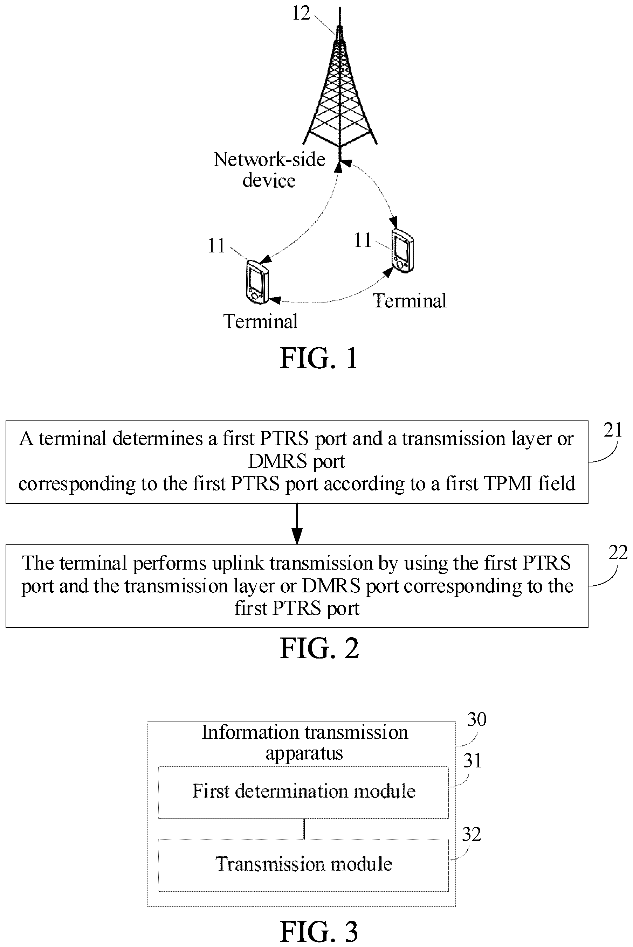

FIG. 1 shows a block diagram of a wireless communication system applicable in an embodiment of the present application. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine or a self-service machine. The wearable device includes: a smart watch, a smart bracelet, smart headphones, smart glasses, a smart jewelry (smart bangle, smart chain bracelet, smart ring, smart necklace, smart anklet, smart ankle, and the like), a smart wristband, smart clothing, and the like. It is to be noted that the specific type of the terminal 11 is not limited in the embodiments of the present application. The network-side device 12 may include an access network device or a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, or a WiFi node, and the like. The base station may be referred to as node B, evolved node B (eNB), access point, base transceiver station (Base Transceiver Station, BTS), radio base station, radio transceiver, basic service set (Basic Service Set, BSS), extended service set (Extended Service Set, ESS), home node B, home evolved node B, transmission reception point (Transmission Reception Point, TRP), or some other suitable terms in the field, as long as the same technical effect is achieved. The base station is not limited to specific technical terms. It is to be noted that description is made by using only a base station in an NR system as an example in the embodiments of the present application, but the specific type of the base station is not limited.

Optionally, the waveform adopted for uplink transmission in the embodiments of the present application may be a discrete Fourier transform (Discrete Fourier Transform, DFT) waveform, such as discrete Fourier transform-spreaded orthogonal frequency division multiple (Discrete Fourier Transform-Spreaded Orthogonal Frequency Division Multiple, DFT-S-OFDM) waveform, which is not limited here.

An information transmission method and apparatus, a terminal, and a readable storage medium provided in the embodiments of the present application will be described below in detail through some embodiments and application scenarios thereof with reference to the drawings.

Referring to FIG. 2. FIG. 2 is a flowchart of an information transmission method provided by an embodiment of the present application. The method is performed by a terminal. Referring to FIG. 2, the method includes the following steps:

Step 21: The terminal determines a first PTRS port and a transmission layer or DMRS port corresponding to the first PTRS port according to a first TPMI field.

In the present embodiment, the first transmit precoding matrix indicator (Transmit Precoding Matrix Indicator, TPMI) field, also referred to as a precoding information and number of layers (Precoding information and number of layers) field, is a TPMI field associated with a target object associated with uplink transmission of the terminal. That is, the first TPMI field is associated with the target object associated with the uplink transmission of the terminal. The first PTRS port is a PTRS port actually used by the terminal.

The situation that the TPMI field is associated with the target object may include: a plurality of target objects respectively correspond to a plurality of TPMI fields, or one target object corresponds to one TPMI field, or a plurality of target objects correspond to one TPMI field, or one target object is associated with a plurality of TPMI fields.

Optionally, the uplink transmission may include but is not limited to physical uplink shared channel (Physical Uplink Shared Channel, PUSCH) transmission, physical uplink control channel (Physical Uplink Control Channel, PUCCH) transmission, and the like.

In some embodiments, the first TPMI field may be carried in downlink control information (Downlink Control Information, DCI) and sent to the terminal by the network-side device.

In some embodiments, the terminal may be configured with a plurality of PTRS ports, and the first PTRS port is part or all of the plurality of PTRS ports. For example, the first PTRS port may be one PTRS port.

Step 22: The terminal performs uplink transmission by using the first PTRS port and the transmission layer or DMRS port corresponding to the first PTRS port.

In the present embodiment, due to the possibility that the PTRS port actually used by the terminal (i.e., the first PTRS port) corresponds to a plurality of transmission layers or DMRS ports, after determining the transmission layer or DMRS port corresponding to the first PTRS port, the terminal may select a transmission layer or DMRS port associated with the first PTRS port (e.g., an associated transmission layer/DMRS port) from the transmission layers or DMRS ports corresponding to the first PTRS port according to a received PTRS-DMRS association indicator field, and perform uplink transmission by using the first PTRS port and the transmission layer or DMRS port associated with the first PTRS port.

It should be pointed out that the target objects involved in the present embodiment are parameters related to uplink data transmission. For example, the target objects may include: beam (beam), transmission and reception point (Transmission and Reception Point, TRP), antenna panel (panel), transmission configuration indicator (Transmission Configuration Indicator, TCI) state, TCI state pool, spatial relation (spatial relation), sounding reference signal (Sounding Reference Signal, SRS) resource, SRS port configured for SRS resource, SRS resource set, reference signal, path loss reference signal and the like, and may also refer to certain specific indicator fields such as SRS resource indicator field.

The antenna panel may also be referred to as one of the following: antenna group, antenna port group, antenna set, antenna port set, beam set, beam subset, antenna array, antenna port array, antenna sub-array, antenna port sub-array, logical entity, entity or antenna entity, antenna panel entity (panel entity), timing error group (timing error group, TEG), terminal capability value, terminal capability value set, and the like.

Optionally, the antenna panel includes a corresponding panel identification. The panel identification may include at least one of the following: antenna panel identification, reference signal resource identification, reference signal resource set identification, TCI state identification, quasi co-location (Quasi Co-Location, QCL) information identification, spatial relation identification, terminal capability value index, terminal capability value set index, and the like.

The beam information involved in the present embodiment may also be referred to as one of the following: identification information of beams, spatial relation (spatial relation) information, spatial domain transmission filter (spatial domain transmission filter) information, spatial domain reception filter (spatial domain reception filter) information, spatial filter (spatial filter) information, transmission configuration indicator state (TCI state) information, QCL information, QCL parameter, and the like. Downlink beam information may usually be represented by using TCI state information or QCL information, while uplink beam information may usually be represented by using TCI state information.

In some embodiments, the uplink transmission of the terminal may be associated with a plurality of target objects (e.g., TCI states). In this case, the terminal is in a multi-panel scenario, and the association with the target objects may also be understood as applying the target objects for transmission, or pre-encoding the target objects for transmission.

In some other embodiments, the uplink transmission of the terminal may be associated with one target object (e.g., panel).

According to the information transmission method in the embodiment of the present application, the terminal can determine the first PTRS port and the transmission layer associated with the first PTRS port according to the first TPMI field associated with the target object associated with the uplink transmission of the terminal, and perform uplink transmission by using the first PTRS port and the transmission layer associated with the first PTRS port. The first PTRS port is the PTRS port actually used by the terminal. In this way, the terminal can determine the PTRS port actually used by the terminal, thus effectively ensuring PTRS transmission performance.

Optionally, in the embodiments of the present application, the first PTRS port may be a PTRS port corresponding to an uplink transmission antenna port indicated by the first TPMI field, the transmission layer (layer) corresponding to the first PTRS port may be part or all of transmission layers corresponding to the uplink transmission antenna port indicated by the first TPMI field, and the DMRS port corresponding to the first PTRS port may be part or all of DMRS ports corresponding to the uplink transmission antenna port indicated by the first TPMI field.

For example, it is assumed that the terminal is configured with a PTRS port 0 and a PTRS port 1, PUSCH antenna ports 1000 and 1002 are associated with/share the PTRS port 0, PUSCH antenna ports 1001 and 1002 are associated with/share the PTRS port 1, the transmission layer transmitted by the PUSCH antenna ports 1000 and 1002 is associated with the PTRS port 0, and the transmission layer transmitted by the PUSCH antenna ports 1001 and 1002 is associated with the PTRS port 1. So, in a case that the first TPMI field associated with the target object associated with PUSCH transmission indicates the PUSCH antenna ports 1001 and 1002, it can be determined that the first PTRS port (i.e., the PTRS port actually used by the terminal) is the PTRS port 1, and the layer corresponding to the first PTRS port is a plurality of layers transmitted by the PUSCH antenna ports 1001 and 1002, that is, all of layers corresponding to the PUSCH antenna ports 1001 and 1002; and in a case that the first TPMI field associated with the target object associated with PUSCH transmission indicates the PUSCH antenna ports 1000 and 1002, it can be determined that the first PTRS port (i.e., the PTRS port actually used by the terminal) is the PTRS port 0, and the layer corresponding to the first PTRS port is a plurality of layers transmitted by the PUSCH antenna ports 1000 and 1002, that is, all of layers corresponding to the PUSCH antenna ports 1001 and 1002.

For another example, it is assumed that in the case of eight antennas (eight Transport, eight Tx), the terminal is configured with a PTRS port 0 and a PTRS port 1, PUSCH antenna ports are divided into two groups, namely a first group of ports and a second group of ports; the first group of ports corresponds to a plurality of layers, the first group of ports is associated with the PTRS port 0, and the PTRS port 0 only corresponds to the first two layers of the first group of ports for transmission; and the second group of ports corresponds to a plurality of layers, the second group of ports is associated with the PTRS port 1, and the PTRS port 1 only corresponds to the first two layers of the second group of ports for transmission. So, in a case that the first TPMI field associated with the target object associated with PUSCH transmission indicates the first group of ports, it can be determined that the first PTRS port (i.e., the PTRS port actually used by the terminal) is the PTRS port 0, and the layer corresponding to the first PTRS port is the first two layers of the first group of ports, that is, part of layers corresponding to the first group of ports; or, in a case that the first TPMI field associated with the target object associated with PUSCH transmission indicates the second group of ports, it can be determined that the first PTRS port (i.e., the PTRS port actually used by the terminal) is the PTRS port 1, and the layer corresponding to the first PTRS port is the first two layers of the second group of ports, that is, part of layers corresponding to the second group of ports; or, in a case that the first TPMI field associated with the target object associated with PUSCH transmission indicates the first group of ports and the second group of ports, it can be determined that the first PTRS port (i.e., the PTRS port actually used by the terminal) is the PTRS port 0 and the PTRS port 1, and the corresponding layer is part of the layers corresponding to the first group of ports and part of the layers corresponding to the second group of ports.

For example, in a case that the received PTRS-DMRS association indicator field contains three bits and the PTRS port 0 corresponds to eight transmission layers/DMRS ports, then based on this PTRS-DMRS association indicator field, one transmission layer/DMRS port is selected from the eight transmission layers/DMRS ports as the transmission layer/DMRS port associated with the PTRS port 0.

For another example, in a case that the received PTRS-DMRS association indicator field contains two bits and the PTRS port 0 corresponds to eight transmission layers/DMRS ports, then based on this PTRS-DMRS association indicator field, one transmission layer/DMRS port is selected from the first four transmission layer/DMRS ports of the eight transmission layers/DMRS ports as the transmission layers/DMRS ports associated with the PTRS port 0.

For another example, in a case that the received PTRS-DMRS association indicator field contains four bits, the first two bits indicate selecting one transmission layer/DMRS port from the four transmission layers/DMRS ports corresponding to the PTRS port 0 as the transmission layer/DMRS port associated with the PTRS port 0, and the last two bits indicate selecting one transmission layer/DMRS port from the four transmission layers/DMRS ports corresponding to the PTRS port 1 as the transmission layer/DMRS port associated with the PTRS port 0.

For another example, in a case that the received PTRS-DMRS association indicator field contains two bits, the first one bit indicates selecting one transmission layer/DMRS port from the first two transmission layers/DMRS ports of the four transmission layers/DMRS ports corresponding to the PTRS port 0 as the transmission layer/DMRS port associated with the PTRS port 0, and the last one bit indicates selecting one transmission layer/DMRS port from the first two transmission layers/DMRS ports of the four transmission layers/DMRS ports corresponding to the PTRS port 1 as the transmission layer/DMRS port associated with the PTRS port 0.

Optionally, in a case that the uplink transmission of the terminal is associated with a plurality of target objects, the first PTRS port and the transmission layer associated with the first PTRS port may be determined by adopting at least one of the following:

1) For each target object, the terminal determines the first PTRS port and the transmission layer or DMRS port corresponding to the first PTRS port according to the first TPMI field associated with the target object. In this way, in multiple target object (such as panel) scenarios, per-panel PTRS port determination can be achieved without introducing new PTRS ports.

For example, in a case that the PUSCH transmission of the terminal is associated with two target objects, such as a first target object and a second target object, then for the first target object, the PTRS port actually used by the terminal and the associated transmission layer are determined according to a first TPMI field associated with the first target object, and for the second target object, the PTRS port actually used by the terminal and the associated transmission layer are determined according to a first TPMI field associated with the second target object.

2) The terminal determines the first PTRS port and the transmission layer or DMRS port corresponding to the first PTRS port according to the first TPMI field associated with any one of the plurality of target objects. In this way, in multiple target object (such as panel) scenarios, per-panel PTRS port determination can be achieved without introducing new PTRS ports.

For example, in a case that the PUSCH transmission of the terminal is associated with two target objects, such as a first target object and a second target object, the PTRS port actually used by the terminal and the corresponding transmission layer may be determined according to the first TPMI field associated with the first target object or second target object. This determined PTRS port and associated transmission layer are applicable to the first target object and the second target object. Here, the first TPMI field associated with the first target object or the second target object may also be described as the first TPMI field and a second TPMI field.

Optionally, in a case that the uplink transmission of the terminal is associated with one target object, the terminal determines the first PTRS port and the transmission layer associated with the first PTRS port according to the first TPMI field associated with the one target object, thus determining the PTRS port actually used by the terminal and the associated transmission layer.

Optionally, in a case that the terminal is configured with a plurality of PTRS ports and the uplink transmission of the terminal is associated with a plurality of target objects, then the plurality of PTRS ports and the plurality of target objects are in one-to-one correspondence, each of the PTRS ports is associated with a first transmission layer associated with the corresponding target object, and the first transmission layer includes at least one transmission layer.

For example, in a case that the terminal is configured with a PTRS port 0 and a PTRS port 1, and the PUSCH transmission of the terminal is associated with two target objects, such as a first target object and a second target object, then: the PTRS port 0 and the PTRS port 1 are in one-to-one correspondence with the first target object and the second target object, each PTRS port is associated with the first transmission layer associated with the corresponding target object, and the first transmission layer includes at least one transmission layer. For example, in a case that the PTRS port 0 corresponds to the first target object, the PTRS port 1 corresponds to the second target object, the first target object is associated with the first transmission layer, and the second target object is associated with a second transmission layer, then the PTRS port 0 is associated with the first transmission layer associated with the first target object, and the PTRS port 1 is associated with the second transmission layer associated with the second target object, where the first transmission layer and the second transmission layer each include at least one transmission layer.

Optionally, in a case that the terminal is configured with a plurality of PTRS ports and the uplink transmission of the terminal is associated with one target object of a plurality of target objects, the terminal may determine a preset PTRS port or default PTRS port of the plurality of PTRS ports as the first PTRS port, thus determining the PTRS port actually used by the terminal and the associated transmission layer.

For example, in a case that the terminal is configured with a PTRS port 0 and a PTRS port 1, and the PUSCH transmission of the terminal is associated with one target object, the PTRS port actually used by the terminal may be a preset PTRS port 0 or PTRS port 1, or a default PTRS port 0 or PTRS port 1; and the PTRS port actually used by the terminal is associated with all transmission layers indicated by the TPMI field associated with the one target object.

Optionally, in a case that the uplink transmission of the terminal is associated with one target object, the terminal determines the first PTRS port and the transmission layer associated with the first PTRS port according to the first TPMI field associated with the one target object, thus determining the PTRS port actually used by the terminal and the associated transmission layer.

In the embodiments of the present application, in order to effectively ensure the performance of PTRS transmission, in a case that the uplink transmission of the terminal is associated with a plurality of target objects, the terminal may determine a power scaling factor of the first PTRS port (i.e., the actually used PTRS port) according to first information. The first information includes at least one of the following:

1) Coherent characteristic information of a plurality of precoding matrices adopted for the uplink transmission associated with a plurality of target objects.

Optionally, the coherent characteristic information is determined by a plurality of TPMI fields and/or SRI fields received by the terminal.

Optionally, the coherent characteristic information is determined by a preset TPMI field and/or SRI field of the plurality of TPMI fields and/or SRI fields, such as a first TPMI field/SRI field.

2) The number of PTRS ports for the uplink transmission associated with a plurality of target objects.

Optionally, the number of PTRS ports in 2) includes at least one of the following: the total number of PTRS ports scheduled for the uplink transmission associated with the plurality of target objects and the number of PTRS ports respectively associated with the uplink transmission associated with the plurality of target objects.

3) The number of transmission layers for the uplink transmission associated with a plurality of target objects.

Optionally, the number of transmission layers in 3) includes at least one of the following:

the number of transmission layers corresponding to each of the target objects, where the number of transmission layers can be determined respectively by a TPMI field and/or sounding reference signal resource indicator (SRS Resource Indicator, SRI) field associated with each of the target objects; for example, the number of transmission layers corresponding to each of the target objects is the number of transmission layers indicated by the TPMI field/SRI field associated with the target object; and

the total number of transmission layers corresponding to the plurality of target objects, where the total number of transmission layers can be determined by TPMI fields and/or SRI fields associated with the plurality of target objects; for example, the total number of transmission layers is the sum of the number of transmission layers indicated by a plurality of TPMI fields/SRI fields associated with the plurality of target objects.

For example, in a case that the PUSCH transmission is associated with two TCI states, the power scaling factor of the PTRS port actually used for the PUSCH transmission in each TCI state is determined by the number of transmission layers indicated by the TPMI field corresponding to the TCI state, coherent characteristics, and the number of actually used PTRS ports corresponding to the TCI state.

For another example, in a case that the PUSCH transmission is associated with two TCI states, the power scaling factor of the PTRS port actually used for the PUSCH transmission in each TCI state is determined by the number of transmission layers indicated by the TPMI field corresponding to the TCI state, coherent characteristics, and the total number of actually used PTRS ports corresponding to the two TCI states.

For example, taking PUSCH transmission as an example, the power scaling factor ($\alpha_{PTRS}^{PUSCH}$) of the PTRS port may be interpreted as in Table 1:

Table 1

| | The number of PSSCH transmission layers (The number of PUSCH layers, $n_{layer}^{PUSCH}$) | | | | | | | |
|---|---|---|---|---|---|---|---|---|
| | 1 | 2 | | 3 | | 4 | | |
| | All cases (All cases) | Full coherent (Full coherent) | Partial coherent/non-coherent/non-codebook based (Partial and non-coherent and non-codebook based) | Full coherent | Partial coherent/non-coherent/non-codebook based | Full coherent | Partial coherent | Non-coherent/non-codebook based |
| 00 | 0 | 3 | $3Q_p-3$ | 4.77 | $3Q_p-3$ | 6 | $3Q_p$ | $3Q_p-3$ |
| 01 | 0 | 3 | 3 | 4.77 | 4.77 | 6 | 6 | 6 |
| 10 | Reserved (Reserved) | | | | | | | |
| 11 | Reserved | | | | | | | |

For example, in a case that the PUSCH transmission is associated with two TCI states, for the PUSCH transmission of a certain TCI state, the number of transmission layers indicated by the TPMI field corresponding to the TCI state is two, and the coherent characteristic is full coherent, then refer to Table 1, it can be determined that the power scaling factor of the corresponding PTRS port is three. Alternatively, in a case that for the PUSCH transmission in a certain TCI state, the number of transmission layers indicated by the TPMI field corresponding to the TCI state is three, the coherent characteristic is partial coherent/non-coherent/non-codebook based, and the number of PTRS ports actually scheduled is Qp, then refer to Table 1, it can be determined that the power scaling factor of the corresponding PTRS port is 3Qp-3. Alternatively, in a case that for the PUSCH transmission in a certain TCI state, the number of transmission layers indicated by the TPMI field corresponding to the TCI state is four, the coherent characteristic is partial coherent, and the number of PTRS ports actually scheduled is Qp, then refer to Table 1, it can be determined that the power scaling factor for the corresponding PTRS port is 3Qp.

The information transmission method provided in the embodiment of the present application may be executed by an information transmission apparatus. In the embodiment of the present application, an information transmission apparatus provided by the embodiments of the present application will be described by taking the situation that the information transmission apparatus executes the information transmission method as an example.

Referring to FIG. 3. FIG. 3 is a schematic structural diagram of an information transmission apparatus provided by an embodiment of the present application. The apparatus is applied to a terminal. As shown in FIG. 3, the information transmission apparatus 30 includes:

a first determination module 31, configured to determine a first PTRS port and a transmission layer or DMRS port corresponding to the first PTRS port according to a first TPMI field, where the first TPMI field is a TPMI field associated with a target object associated with uplink transmission of the terminal, and the first PTRS port is a PTRS port actually used by the terminal; and

a transmission module 32, configured to perform uplink transmission by using the first PTRS port and the transmission layer or DMRS port corresponding to the first PTRS port.

Optionally, in a case that the uplink transmission of the terminal is associated with a plurality of target objects, the first determination module 31 is configured to perform at least one of the following:

for each target object, determining the first PTRS port and the transmission layer or DMRS port corresponding to the first PTRS port according to the first TPMI field associated with the target object; and

determining the first PTRS port and the transmission layer or DMRS port corresponding to the first PTRS port according to the first TPMI field associated with any one of the plurality of target objects.

Optionally, in a case that the uplink transmission of the terminal is associated with one target object of a plurality of target objects, the first determination module 31 is specifically configured to:
determine the first PTRS port and the transmission layer or DMRS port corresponding to the first PTRS port according to the first TPMI field associated with the one target object.

Optionally, the first PTRS port is a PTRS port corresponding to an uplink transmission antenna port indicated by the first TPMI field, and the transmission layer corresponding to the first PTRS port is part or all of transmission layers corresponding to the uplink transmission antenna port indicated by the first TPMI field, or the DMRS port corresponding to the first PTRS port is part or all of DMRS ports corresponding to the uplink transmission antenna port indicated by the first TPMI field.

Optionally, the transmission module 32 is specifically configured to: select a transmission layer or DMRS port associated with the first PTRS port from transmission layers or DMRS ports corresponding to the first PTRS port according to a received PTRS-DMRS association indicator field, and perform uplink transmission by using the first PTRS port and the transmission layer or DMRS port associated with the first PTRS port.

Optionally, in a case that the terminal is configured with a plurality of PTRS ports and the uplink transmission of the terminal is associated with a plurality of target objects, then the plurality of PTRS ports and the plurality of target objects are in one-to-one correspondence, each of the PTRS ports corresponds to a first transmission layer associated with the corresponding target object, and the first transmission layer includes at least one transmission layer.

Optionally, in a case that the terminal is configured with a plurality of PTRS ports and the uplink transmission of the terminal is associated with one target object of the plurality of target objects, the first determination module 31 is further configured to:

determine a preset PTRS port or default PTRS port of the plurality of PTRS ports as the first PTRS port.

Optionally, the information transmission apparatus 30 further includes:

a second determination module, configured to determine a power scaling factor of the first PTRS port according to first information in a case that the uplink transmission of the terminal is associated with a plurality of target objects, where the first information includes at least one of the following:
coherent characteristic information of a plurality of precoding matrices adopted for the uplink transmission;
the number of PTRS ports for the uplink transmission; and
the number of transmission layers for the uplink transmission.

Optionally, the coherent characteristic information is determined by a plurality of TPMI fields and/or SRI fields received by the terminal;

and/or, the number of PTRS ports includes at least one of the following: the total number of PTRS ports scheduled for the uplink transmission and the number of PTRS ports respectively associated with the plurality of target objects;
and/or, the number of transmission layers includes at least one of the following: the number of transmission layers corresponding to each of the target objects respectively, and the total number of transmission layers corresponding to the plurality of target objects.

In the embodiment of the present application, the information transmission apparatus 30 may be an electronic device, such as an electronic device having an operating system, or a component within an electronic device, such as an integrated circuit or chip. The electronic device may be a terminal or any other device except a terminal. Exemplarily, the terminal may include but is not limited to the type of the terminal 11 listed above, and the other device may be a server, a network attached storage (Network Attached Storage, NAS) device and the like, which is not specifically limited in the embodiments of the present application.

The information transmission apparatus 30 provided by the embodiment of the present application can implement the various processes implemented in the method embodiment illustrated in FIG. 2 and achieve the same technical effect, which will not be repeated here in order to avoid repetition.

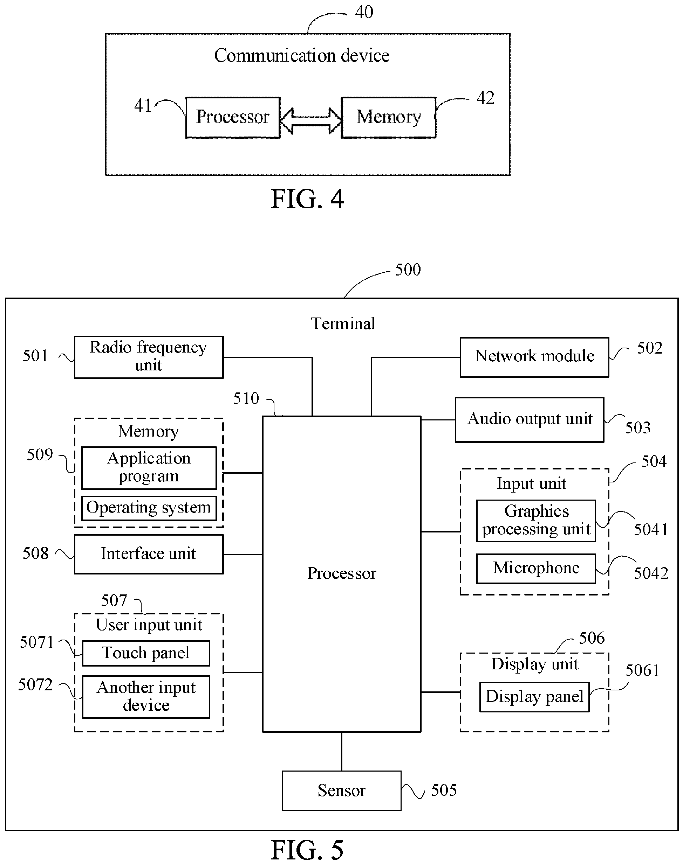

Optionally, as shown in FIG. 4, an embodiment of the present application further provides a communication device 40, which includes a processor 41 and a memory 42. Programs or instructions runnable on the processor 41 are stored on the memory 42. The programs or instructions, when executed by the processor 41, implement the various steps of the information transmission method embodiment described above, and can achieve the same technical effect, which will not be repeated here in order to avoid repetition.

An embodiment of the present application further provides a terminal, which includes a processor and a communication interface. The processor is configured to determine a first PTRS port and a transmission layer or DMRS port corresponding to the first PTRS port according to a first TPMI field, where the first TPMI field is a TPMI field associated with a target object associated with uplink transmission of the terminal, and the first PTRS port is a PTRS port actually used by the terminal. The communication interface is configured to perform uplink transmission by using the first PTRS port and the transmission layer or DMRS port corresponding to the first PTRS port. This terminal embodiment corresponds to the above terminal-side method embodiment. The various implementation processes and modes in the above method embodiment are applicable to this terminal embodiment, and can achieve the same technical effect.

Specifically, FIG. 5 is a schematic diagram of a hardware structure of a terminal according to an embodiment of the present application.

The terminal 500 includes but is not limited to: at least part of components such as a radio frequency unit 501, a network module 502, an audio output unit 503, an input unit 504, a sensor 505, a display unit 506, a user input unit 507, an interface unit 508, a memory 509, and a processor 510.

It can be understood by those skilled in the art that the terminal 500 may further include a power supply (such as a battery) for supplying power to the components. The power supply may be logically connected with the processor 510 by a power management system, thus implementing functions such as charging, discharging, and power consumption management by using the power management system. The terminal structure illustrated in FIG. 5 constitutes no limitation on the terminal, and the terminal may include more or fewer components than those illustrated therein, or some components may be combined, or a different component deployment may be used, which will not be repeated here.

It is to be understood that in the embodiments of the present application, the input unit 504 may include a graphics processing unit (Graphics Processing Unit, GPU) 5041 and a microphone 5042. The graphics processing unit 5041 performs processing on image data of a static picture or a video that is obtained by an image capturing device (for example, a camera) in a video capturing mode or an image capturing mode. The display unit 506 may include a display panel 5061, and the display panel 5061 may be configured in the form of liquid crystal display, organic light emitting diode, and the like. Specifically, the user input unit 507 includes at least one of a touch panel 5071 and another input device 5072. The touch panel 5071 is also referred to as touch screen. The touch panel 5071 may include two parts, namely a touch detection apparatus and a touch controller. The another input device 5072 may include, but not limited to, a physical keyboard, a functional key (such as a volume control key or a switch key), a track ball, a mouse, and a joystick, which are not repeated herein.

In the embodiment of the present application, the radio frequency unit 501 receives downlink data from the network-side device and then transmits the downlink data to the processor 510 for processing. In addition, the radio frequency unit 501 may send uplink data to the network-side device. Generally, the radio frequency unit 501 includes, but is not limited to, an antenna, an amplifier, a transceiver, a coupler, a low-noise amplifier, a duplexer, and the like.

The memory 509 may be configured to store software programs or instructions and various data. The memory 509 may mainly include a first storage area for storing programs or instructions and a second storage area for storing data. The first storage area may store an operating system, application programs or instructions required by at least one function (for example, a sound playback function or an image display function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). The memory 509 in the embodiment of the present application includes, but is not limited to, these and any other suitable types of memories.

The processor 510 may include one or more processing units. Optionally, the processor 510 may integrate an application processor and a modem processor. The application processor mainly processes operations of the operating system, a user interface, an application program and the like. The modem processor mainly processes wireless communication signal, which, for example, is a baseband processor. It is to be understood that the foregoing modem processor may not be integrated into the processor 510.

The processor 510 is configured to determine a first PTRS port and a transmission layer or DMRS port corresponding to the first PTRS port according to a first TPMI field, where the first TPMI field is a TPMI field associated with a target object associated with uplink transmission of the terminal 500, and the first PTRS port is a PTRS port actually used by the terminal 500.

The radio frequency unit 501 is configured to perform uplink transmission by using the first PTRS port and the transmission layer or DMRS port corresponding to the first PTRS port.

Optionally, in a case that the uplink transmission of the terminal 500 is associated with a plurality of target objects, the processor 510 may be configured to perform at least one of the following:

for each target object, determining the first PTRS port and the transmission layer or DMRS port corresponding to the first PTRS port according to the first TPMI field associated with the target object; and

determining the first PTRS port and the transmission layer or DMRS port corresponding to the first PTRS port according to the first TPMI field associated with any one of the plurality of target objects.

Optionally, in a case that the uplink transmission of the terminal 500 is associated with one target object of a plurality of target objects, the processor 510 is specifically configured to:
determine the first PTRS port and the transmission layer or DMRS port corresponding to the first PTRS port according to the first TPMI field associated with the one target object.

Optionally, the first PTRS port is a PTRS port corresponding to an uplink transmission antenna port indicated by the first TPMI field, and the transmission layer corresponding to the first PTRS port is part or all of transmission layers corresponding to the uplink transmission antenna port indicated by the first TPMI field, or the DMRS port corresponding to the first PTRS port is part or all of DMRS ports corresponding to the uplink transmission antenna port indicated by the first TPMI field.

Optionally, in a case that the terminal 500 is configured with a plurality of PTRS ports and the uplink transmission of the terminal 500 is associated with a plurality of target objects, then the plurality of PTRS ports and the plurality of target objects are in one-to-one correspondence, each of the PTRS ports corresponds to a first transmission layer associated with the corresponding target object, and the first transmission layer includes at least one transmission layer.

Optionally, in a case that the terminal 500 is configured with a plurality of PTRS ports and the uplink transmission of the terminal 500 is associated with one target object, the processor 510 is further configured to:
determine a preset PTRS port or default PTRS port of the plurality of PTRS ports as the first PTRS port.

Optionally, the processor 510 is further configured to determine a power scaling factor of the first PTRS port according to first information in a case that the uplink transmission of the terminal 500 is associated with a plurality of target objects,

where the first information includes at least one of the following:
coherent characteristic information of a plurality of precoding matrices adopted for the uplink transmission;
the number of PTRS ports for the uplink transmission; and
the number of transmission layers for the uplink transmission.

Optionally, the coherent characteristic information is determined by a plurality of TPMI fields and/or SRI fields received by the terminal 500;

and/or, the number of PTRS ports includes at least one of the following: the total number of PTRS ports scheduled for the uplink transmission and the number of PTRS ports respectively associated with the plurality of target objects;
and/or, the number of transmission layers includes at least one of the following: the number of transmission layers corresponding to each of the target objects respectively, and the total number of transmission layers corresponding to the plurality of target objects.

The terminal 500 provided by the embodiment of the present application can implement the various processes implemented in the method embodiment illustrated in FIG. 2 and achieve the same technical effect, which will not be repeated here in order to avoid repetition.

An embodiment of the present application further provides a readable storage medium. Programs or instructions are stored on the readable storage medium. The programs or instructions, when executed by a processor, implement the various processes of the information transmission method embodiment, and can achieve the same technical effect, which will not be repeated here in order to avoid repetition.

The processor is a processor in the terminal described in the above embodiment. The readable storage medium includes a computer-readable storage medium, such as a computer read-only memory ROM, a random access memory RAM, a magnetic disk, and an optical disk.

An embodiment of the present application further provides a chip. The chip includes a processor and a communication interface coupled with the processor. The processor is configured to run programs or instructions to implement the various processes of the information transmission method embodiment, and can achieve the same technical effect, which will not be repeated here in order to avoid repetition.

It is to be understood that the chip provided by the embodiment of the present application may also be referred to as system-level chip, system chip, chip system, or system on chip.

An embodiment of the present application further provides a computer program/program product. The computer program/program product is stored in a storage medium. The computer program/program product is executed by at least one processor to implement the various processes of the information transmission method embodiment, and can achieve the same technical effect, which will not be repeated here in order to avoid repetition.

A person of ordinary skill in the art may notice that the exemplary units and algorithm steps described with reference to the embodiments disclosed in the present specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but such implementation is not to be considered beyond the scope of the present disclosure.

A person skilled in the art may clearly understand that for convenience and conciseness of description, for specific working processes of the foregoing systems, apparatuses and units, reference may be made to the corresponding processes in the foregoing method embodiments, and details are not described herein again.

In the embodiments provided by the present application, it should be understood that the disclosed apparatus and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, that is, may be located in one place or may be distributed over a plurality of network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit.

In a case that the function is implemented in the form of a software functional unit and sold or used as an independent product, it may be stored in a computer-readable storage medium. Based on such an understanding, the technical solutions of the present disclosure essentially, or the part contributing to the prior art, or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes various medium that can store program codes, such as a USB flash disk, a mobile hard disk, an ROM, an RAM, a magnetic disk, or an optical disks.

A person of ordinary skill in the art may understand that all or some of the processes of the methods in the embodiments may be implemented via controlling relevant hardware by a computer program. The program may be stored in a computer-readable storage medium. When the program is executed, the processes of the foregoing method embodiments may be performed. The foregoing storage medium may include a magnetic disk, an optical disk, a read-only memory (Read-Only Memory, ROM), a random access memory (Random Access Memory, RAM), or the like.

It is to be noted that the terms "include", "comprise", or any other variation thereof herein are intended to cover a non-exclusive inclusion, such that a process, method, article or apparatus including a series of elements not only includes those listed elements, but also includes other elements not expressly listed, or also includes elements inherent to the process, method, article or apparatus. Without further limitations, the element limited by the statement "including a..." does not preclude the presence of another identical element in a process, method, article or apparatus that includes that element. In addition, the scope of the method and apparatus in the implementations of the present application is not limited to performing functions in the order shown or discussed, but may also include performing functions in a substantially simultaneous manner or in the opposite order according to the involved functions. For example, the described methods may be executed in a different order from the described order, and various steps may also be added, omitted or combined. In addition, features described with reference to certain examples may be combined in other examples.

Through the description of the above implementations, those skilled in the art can clearly understand that the above embodiment methods may be implemented through software and necessary universal hardware platforms. Of course, they may also be implemented through hardware. However, in many cases, the former is preferred. Based on such an understanding, the technical solution of the present application essentially, or the part contributing to the prior art may be implemented in the form of a software product. The computer software product is stored in a storage medium (such as ROM/RAM, magnetic disk or optical disk) and includes several instructions to enable a terminal (which may be a mobile phone, a computer, a server, an air conditioner or a network device) to execute the methods described in the embodiments of the present application.

The embodiments of the present application have been described above with reference to the drawings. However, the present application is not limited to the specific implementations above. The specific implementations above are only exemplary rather than restrictive. Under the inspiration of the present application, those of ordinary skill in the art may make many variations without departing from the essence of the present application and the scope of protection claimed by the claims, and all these variations still fall within the scope of protection of the present application.

**Claims**

1.  An information transmission method, comprising:

    determining, by a terminal, a first phase tracking reference signal PTRS port and a transmission layer or demodulation reference signal DMRS port corresponding to the first PTRS port according to a first transmit precoding matrix indicator TPMI field, wherein the first TPMI field is a TPMI field associated with a target object associated with uplink transmission of the terminal, and the first PTRS port is a PTRS port actually used by the terminal; and
    performing, by the terminal, uplink transmission by using the first PTRS port and the transmission layer or DMRS port corresponding to the first PTRS port.

2.  The method according to claim 1, wherein in a case that the uplink transmission of the terminal is associated with a plurality of target objects, the determining a first PTRS port and a transmission layer or DMRS port corresponding to the first PTRS port according to a first TPMI field comprises at least one of the following:

    for each target object, determining, by the terminal, the first PTRS port and the transmission layer corresponding to the first PTRS port according to the first TPMI field associated with the target object respectively; and
    determining, by the terminal, the first PTRS port and the transmission layer or DMRS port corresponding to the first PTRS port according to the first TPMI field associated with any one of the plurality of target objects.

3.  The method according to claim 1, wherein in a case that the uplink transmission of the terminal is associated with one target object of a plurality of target objects, the determining a first PTRS port and a transmission layer or DMRS port corresponding to the first PTRS port according to a first TPMI field comprises:
    determining, by the terminal, the first PTRS port and the transmission layer or DMRS port corresponding to the first PTRS port according to the first TPMI field associated with the one target object.

4.  The method according to any one of claims 1 to 3, wherein the first PTRS port is a PTRS port corresponding to an uplink transmission antenna port indicated by the first TPMI field, and the transmission layer corresponding to the first PTRS port is part or all of transmission layers corresponding to the uplink transmission antenna port indicated by the first TPMI field, or the DMRS port corresponding to the first PTRS port is part or all of DMRS ports corresponding to the uplink transmission antenna port indicated by the first TPMI field.

5.  The method according to claim 1, wherein the performing uplink transmission by using the first PTRS port and the transmission layer or DMRS port corresponding to the first PTRS comprises:
    selecting, by the terminal, a transmission layer or DMRS port associated with the first PTRS port from transmission layers or DMRS ports corresponding to the first PTRS port according to a received PTRS-DMRS association indicator field, and performing uplink transmission by using the first PTRS port and the transmission layer or DMRS port associated with the first PTRS port.

6.  The method according to claim 1, wherein in a case that the terminal is configured with a plurality of PTRS ports and the uplink transmission of the terminal is associated with a plurality of target objects, then the plurality of PTRS ports and the plurality of target objects are in one-to-one correspondence, each of the PTRS ports corresponds to a first transmission layer associated with the corresponding target object, and the first transmission layer comprises at least one transmission layer;
    or,

    in a case that the terminal is configured with a plurality of PTRS ports and the uplink transmission of the terminal is associated with one target object of the plurality of target objects, the method further comprises:
    determining, by the terminal, a preset PTRS port or default PTRS port of the plurality of PTRS ports as the first PTRS port.

7.  The method according to any one of claims 1 to 5, wherein in a case that the uplink transmission of the terminal is associated with a plurality of target objects, the method further comprises:

    determining, by the terminal, a power scaling factor of the first PTRS port according to first information, wherein the first information comprises at least one of the following:

coherent characteristic information of a plurality of precoding matrices adopted for the uplink transmission;
the number of PTRS ports for the uplink transmission; and
the number of transmission layers for the uplink transmission.

8. The method according to claim 7, wherein the coherent characteristic information is determined by a plurality of TPMI fields and/or SRI fields received by the terminal;
and/or,

the number of PTRS ports comprises at least one of the following: the total number of PTRS ports scheduled for the uplink transmission and the number of PTRS ports respectively associated with the plurality of target objects; and/or,
the number of transmission layers comprises at least one of the following: the number of transmission layers corresponding to each of the target objects, and the total number of transmission layers corresponding to the plurality of target objects.

9. An information transmission apparatus, comprising:

a first determination module, configured to determine a first PTRS port and a transmission layer or DMRS port corresponding to the first PTRS port according to a first TPMI field, wherein the first TPMI field is a TPMI field associated with a target object associated with uplink transmission of a terminal, and the first PTRS port is a PTRS port actually used by the terminal; and
a transmission module, configured to perform uplink transmission by using the first PTRS port and the transmission layer or DMRS port corresponding to the first PTRS port.

10. The apparatus according to claim 9, wherein in a case that the uplink transmission of the terminal is associated with a plurality of target objects, the first determination module is configured to perform at least one of the following:

for each target object, determining the first PTRS port and the transmission layer or DMRS port corresponding to the first PTRS port according to the first TPMI field associated with the target object; and
determining the first PTRS port and the transmission layer or DMRS port corresponding to the first PTRS port according to the first TPMI field associated with any one of the plurality of target objects.

11. The apparatus according to claim 9, wherein in a case that the uplink transmission of the terminal is associated with one target object of a plurality of target objects, the first determination module is specifically configured to:
determine the first PTRS port and the transmission layer or DMRS port corresponding to the first PTRS port according to the first TPMI field associated with the one target object.

12. The apparatus according to any one of claims 9 to 11, wherein the first PTRS port is a PTRS port corresponding to an uplink transmission antenna port indicated by the first TPMI field, and the transmission layer corresponding to the first PTRS port is part or all of transmission layers corresponding to the uplink transmission antenna port indicated by the first TPMI field, or the DMRS port corresponding to the first PTRS port is part or all of DMRS ports corresponding to the uplink transmission antenna port indicated by the first TPMI field.

13. The apparatus according to claim 9, wherein in a case that the terminal is configured with a plurality of PTRS ports and the uplink transmission of the terminal is associated with a plurality of target objects, then the plurality of PTRS ports and the plurality of target objects are in one-to-one correspondence, each of the PTRS ports corresponds to a first transmission layer associated with the corresponding target object, and the first transmission layer comprises at least one transmission layer;
or,

in a case that the terminal is configured with a plurality of PTRS ports and the uplink transmission of the terminal is associated with one target object of the plurality of target objects, the first determination module is further configured to:
determine a preset PTRS port or default PTRS port of the plurality of PTRS ports as the first PTRS port.

14. The apparatus according to any one of claims 9 to 13, wherein the apparatus further comprises:

a second determination module, configured to determine a power scaling factor of the first PTRS port according to first information in a case that the uplink transmission of the terminal is associated with a plurality of target objects, wherein the first information comprises at least one of the following:

coherent characteristic information of a plurality of precoding matrices adopted for the uplink transmission;
the number of PTRS ports for the uplink transmission; and
the number of transmission layers for the uplink transmission.

15. A terminal, comprising a processor and a memory, wherein the memory stores programs or instructions runnable on the processor, and the programs or instructions, when executed by the processor, implement the steps of the information transmission method according to any one of claims 1 to 8.

16. A readable storage medium, wherein the readable storage medium stores programs or instructions, and the programs or instructions, when executed by a processor, implement the steps of the information transmission method according to any one of claims 1 to 8.

17. A chip, comprising a processor and a communication interface, wherein the communication interface is coupled with the processor, and the processor is configured to run programs or instructions to implement the steps of the information transmission method according to any one of claims 1 to 8.

18. A computer program/program product, wherein the computer program/program product is stored in a non-transient storage medium, and the computer program/program product is executed by at least one processor to implement the steps of the information transmission method according to any one of claims 1 to 8.

19. A terminal, configured to perform the steps of the information transmission method according to any one of claims 1 to 8.

Network-side device

Terminal

Terminal

FIG. 1

| A terminal determines a first PTRS port and a transmission layer or DMRS port corresponding to the first PTRS port according to a first TPMI field | 21 |

| The terminal performs uplink transmission by using the first PTRS port and the transmission layer or DMRS port corresponding to the first PTRS port | 22 |

FIG. 2

Information transmission apparatus    30

First determination module    31

Transmission module    32

FIG. 3

40

Communication device

41 Processor ⟺ Memory 42

FIG. 4

500

Terminal

501 Radio frequency unit

Network module 502

510 Processor

Audio output unit 503

Memory
509 Application program
Operating system

508 Interface unit

Input unit 504
Graphics processing unit 5041
Microphone 5042

507 User input unit
5071 Touch panel
5072 Another input device

Display unit 506
Display panel 5061

Sensor 505

FIG. 5

## INTERNATIONAL SEARCH REPORT

| International application No. |
| --- |
| **PCT/CN2023/085115** |

**A.    CLASSIFICATION OF SUBJECT MATTER**

H04W72/12(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNABS, CNTXT, VEN, USTXT, WOTXT, EPTXT, CNKI: 终端, 用户设备, 端口, 相位跟踪参考信号, 面板, 资源, 解调参考信号, 传输预编码矩阵, 上行; UE, TMPI, PTRS, PT-RS, DMRS, SSR, UL, port

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108111283 A (ZTE CORP.) 01 June 2018 (2018-06-01) description, paragraphs [0052]-[0198], and figures 1-6(b) | 1-19 |
| X | WO 2021184336 A1 (QUALCOMM INC.) 23 September 2021 (2021-09-23) description, paragraphs [0023]-[0137], and figures 1-7 | 1-19 |
| A | CN 110034904 A (VIVO COMMUNICATION TECHNOLOGY CO., LTD.) 19 July 2019 (2019-07-19) entire document | 1-19 |
| A | CN 109379172 A (SPREADTRUM COMMUNICATIONS (SHANGHAI) CO., LTD.) 22 February 2019 (2019-02-22) entire document | 1-19 |
| A | US 2019182001 A1 (LG ELECTRONICS INC.) 13 June 2019 (2019-06-13) entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 June 2023** | **28 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/085115**

| Patent document cited in search report | | | Publication date (day/month/year) | Patent family member(s) | | | Publication date (day/month/year) |
|---|---|---|---|---|---|---|---|
| CN | 108111283 | A | 01 June 2018 | US | 2021044400 | A1 | 11 February 2021 |
| | | | | US | 11438112 | B2 | 06 September 2022 |
| | | | | WO | 2019085998 | A1 | 09 May 2019 |
| WO | 2021184336 | A1 | 23 September 2021 | EP | 4122138 | A1 | 25 January 2023 |
| CN | 110034904 | A | 19 July 2019 | US | 2021075570 | A1 | 11 March 2021 |
| | | | | US | 11362787 | B2 | 14 June 2022 |
| CN | 109379172 | A | 22 February 2019 | CN | 109379172 | B | 11 June 2021 |
| US | 2019182001 | A1 | 13 June 2019 | CA | 3030799 | A1 | 07 June 2020 |
| | | | | CA | 3030799 | C | 01 June 2021 |
| | | | | US | 10355842 | B2 | 16 July 2019 |
| | | | | AU | 2018298510 | A1 | 27 June 2019 |
| | | | | AU | 2018298510 | B2 | 16 April 2020 |
| | | | | WO | 2019112374 | A1 | 13 June 2019 |
| | | | | US | 2019238293 | A1 | 01 August 2019 |
| | | | | US | 10554360 | B2 | 04 February 2020 |
| | | | | MX | 2019002598 | A | 10 July 2019 |
| | | | | RU | 2742044 | C1 | 02 February 2021 |
| | | | | CL | 2019000066 | A1 | 08 November 2019 |
| | | | | BR | 112019007429 | A2 | 15 October 2019 |
| | | | | BR | 112019007429 | B1 | 02 June 2020 |
| | | | | KR | 20190122616 | A | 30 October 2019 |
| | | | | KR | 20190067731 | A | 17 June 2019 |
| | | | | KR | 102037326 | B1 | 28 October 2019 |
| | | | | US | 2020195404 | A1 | 18 June 2020 |
| | | | | US | 10999031 | B2 | 04 May 2021 |
| | | | | US | 2019356443 | A1 | 21 November 2019 |
| | | | | US | 10644855 | B2 | 05 May 2020 |
| | | | | US | 2019379505 | A1 | 12 December 2019 |
| | | | | US | 10594458 | B2 | 17 March 2020 |
| | | | | PH | 12019500260 | A1 | 21 October 2019 |
| | | | | EP | 3520312 | A1 | 07 August 2019 |
| | | | | EP | 3520312 | A4 | 18 September 2019 |
| | | | | EP | 3520312 | B1 | 02 February 2022 |
| | | | | JP | 2020509617 | A | 26 March 2020 |
| | | | | JP | 6770171 | B2 | 14 October 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210351237